# EUROPÄISCHE PATENTSCHRIFT

(11) **EP 1 888 456 B1**
(45) Veröffentlichungstag und Bekanntmachung des Hinweises auf die Patenterteilung: **31.01.2018**
(21) Anmeldenummer: 06753228.3
(22) Anmeldetag: 31.05.2006
(51) Int. Cl.: C01B 3/38, B01J 8/04

(54) **AUTOTHERMER REFORMER**
AUTOTHERMIC REFORMER
DISPOSITIF DE REFORMAGE AUTOTHERME

(30) Priorität: 10.06.2005 DE 102005026780
(43) Veröffentlichungstag der Anmeldung: 20.02.2008
(73) Patentinhaber: Forschungszentrum Jülich GmbH, 52425 Jülich (DE)
(72) Erfinder: PETERS, Ralf, 52146 Würselen (DE); TSCHAUDER, Andreas, 52428 Jülich (DE); PASEL, Joachim, 52428 Jülich (DE); STOLTEN, Detlef, 52076 Aachen (DE)
(86) Internationale Anmeldenummer: PCT/DE2006/000946
(87) Internationale Veröffentlichungsnummer: WO 2006/131094

(56) Entgegenhaltungen:
- WO-A-02/085509
- WO-A1-03/089128
- WO-A2-03/021696
- DE-A1- 10 057 537
- US-A1- 2002 062 943
- US-A1- 2003 046 867
- US-A1- 2003 093 950
- US-A1- 2004 029 057
- US-A1- 2004 187 386

## Beschreibung

Die Erfindung betrifft einen autothermen Reformer zur Erzeugung eines wasserstoffreichen Gasgemisches zur Nutzung in einer Brennstoffzelle.

### Stand der Technik

Zum Betrieb von Polymer-Elektrolytmembran (PEM)-Brennstoffzellen wird regelmäßig reiner Wasserstoff benötigt. Die Produktion von wasserstoffreichem Produktgas aus Kohlenwasserstoffen erfolgt üblicherweise mit Reformern. Dort wird katalytisch oder auch nicht katalytisch aus einem Kraftstoff, in der Regel aus Alkoholen (z. B. Methanol oder Ethanol) oder Kohlenwasserstoffen (z. B. Methan, Erdgas, Propan, Diesel, Kerosin) mit Wasser, mit einem Oxidationsmittel oder mit Wasser und einem Oxidationsmittel das so genannte Reformat erzeugt. Dieses Reformat wird, nachdem es in einer mehrstufigen Gasreinigung, die in der Regel aus einem zweistufigen Shiftreaktor und einer anschließenden präferenziellen Oxidation besteht, gereinigt und anschließend der Polymer-Elektrolyt-Membran-Brennstoffzelle zugeführt. Das Anodenrestgas der Polymer-Elektrolyt-Membran-Brennstoffzelle wird in einem Brenner mit einem Oxidationsmittel umgesetzt.

Die einzelnen chemischen Reaktionen laufen in der Regel bei unterschiedlichen Temperaturen ab, so beispielsweise die Reformierung bei 250 bis 900 °C und die sich anschließende Reinigung des Reformats bei 200 - 400 °C im Shiftreaktor und bei 50 - 200 °C im Reaktor zur präferentiellen Oxidation. Zudem wird bei den einzelnen Reaktionen teilweise Wärme produziert oder auch zusätzliche Wärme benötigt. Die Dokumente US2004/187386, DE10057537 und US2003/046867 beschreiben alle Vorrichtungen zur Erzeugung von wasserstoffreichem Produktgas mit einem Brenner und einem Reformer.

### Aufgabe und Lösung

Aufgabe der Erfindung ist es, einen autothermen Reformer zur Erzeugung von Wasserstoff für eine Brennstoffzelle zur Verfügung zu stellen, der möglichst autark von äußerer Wärmezufuhr betrieben werden kann. Insbesondere soll der autotherme Reformer den für den Reformierungsprozess erforderlichen Dampf bereitstellen und die Wärme des Abgases des Brenners nutzen.

### Gegenstand der Erfindung

Die grundlegende Idee der Erfindung ist es, die Reformierung und die Nachverbrennung des Anodenabgases thermisch zu koppeln, so dass eine solche Einheit im stationären Betrieb nahezu autark betrieben werden kann.

Das erfindungsgemäße Reformer/Brenner-System löst vorteilhaft das Problem der Verdampfung der Wassers, welches für die autotherme Reformierung benötigt wird, indem die Wärme des Brennerabgases und des Reformats genutzt wird. Überdies wird durch den Wärmeaustrag aus dem Reformat die Reformattemperatur gleichzeitig auf das Temperaturniveau der anschließenden Reinigungsstufe, der Entschwefelung oder der Hochtemperaturshiftstufe abgesenkt.

Die erfindungsgemäße Vorrichtung weist dazu einen Reformerteil und einen Brennerteil auf. Im Reformerteil ist eine erste Mischkammer angeordnet, die einen ersten Einlass, der über eine Düse Kraftstoff und Oxidationsmittel einzuspeisen vermag sowie einen zweiten Einlass aufweist, der über eine Zuführung eine Wasserdampf/Trägergasmischung einzuspeisen vermag. Im Betrieb des autothermen Reformers vermischt sich das Oxidationsmittel mit dem Kraftstoff, dem Wasserdampf und dem Trägergas und die flüssigen Kraftstoffe (z. B. Diesel, Kerosin) werden verdampft. Dieses Gemisch wird anschließend in einem Reaktionsraum über eine katalytisch aktive Oberfläche geführt, wodurch es zu einer Umsetzung in ein wasserstoffreiches Gemisch (Reformat) kommt. Die dabei frei werdende Wärme wird von einem ersten Wärmeaustauscher und weiter von einem zweiten Wärmeaustauscher aufgenommen. Dadurch kühlt das Reformat ab, so dass es aus der erfindungsgemäßen Vorrichtung herausgeleitet werden kann. Das Reformat besitzt dann vorteilhaft eine Temperatur, die für gegebenenfalls nachgeschaltete Gasreinigungsschritte erforderlich ist.

Gleichzeitig wird der erfindungsgemäßen Vorrichtung im Brennerteil Anodenrestgas einer Brennstoffzelle, insbesondere einer PEM, zugeführt. Dieses wird zusammen mit der erforderlichen Menge an einem Oxidationsmittel ebenfalls einer katalytischen Oberfläche zugeführt, wo es sich exotherm umsetzt. Die dabei frei werdende Wärme wird von einem dritten Wärmeaustauscher aufgenommen. Das abgekühlte Abgas wird dann aus der Vorrichtung abgeleitet. Es ist infolge der katalytischen Umsetzung regelmäßig schadstoffarm.

Das für die chemische Umwandlung im Reformerteil benötigte Wasser/Trägergasgemisch wird über eine Zuleitung in die Vorrichtung eingebracht und über einen ersten und einen zweiten Wärmeaustauscher geleitet. Dabei wird es derart erhitzt, dass das Wasser vollständig verdampft und die Mischung überhitzt. Die Wasserdampf/Trägergasmischung wird anschließend im Reformerteil über eine Zuleitung dem verdampften Kraftstoff/Oxidationsmittelgemisch zugeführt.

Das erfindungemäße Verfahren koppelt die chemische Umsetzung des Reformers mit der des Nachbrenners thermisch in einer Art und Weise, dass im optimalen Fall der gesamte für die Reformierung benötigte Wasserdampf ohne weitere externe Wärmezuführung erzeugt werden kann. Ferner setzt das Verfahren die Reformattemperatur auf die für die nachfolgende Gasreinigung erforderliche Temperatur herab, und kühlt zudem vorteilhaft das im Brenner zu Abgas umgesetzte Anodenrestgas der Brennstoffzelle.

Das Verfahren lässt sich in geeigneter Weise durch die erfindungemäße Vorrichtung umsetzen. Diese weist einen Reformerteil mit einem Einlass für eine Kraftstoff/Oxidationsmittelmischung, einen Einlass für eine Wasser/Trägergasmischung, eine katalytische Oberfläche sowie einen ersten Wärmeaustauscher mit einer ersten Durchführung für das Reformat und einer zweiten Durchführung für eine Wasser/Trägergasmischung auf.

Die Vorrichtung weist ferner einen Brennerteil mit einem Einlass für das Anodenrestgas aus einer Brennstoffzelle, einen Einlass für ein Oxidationsmittel, eine katalytische Oberfläche sowie einen dritten Wärmeaustauscher, eine erste Durchführung für das umgesetzte Anodenrestgas und eine zweite Durchführung für eine Wasser/Trägergasmischung auf.

Der Brennerteil und der Reformerteil sind konstruktiv über wenigstens eine Zuführungsleitung einer Wasserdampf/Trägergasmischung miteinander gekoppelt.

### Spezieller Beschreibungsteil

Nachfolgend wird der Gegenstand der Erfindung anhand von zwei Figuren näher erläutert, ohne dass der Gegenstand der Erfindung dadurch beschränkt wird.

Es zeigen:
- Figur 1:: die schematische Kopplung der Wärmeströme zwischen Reformerteil **RT** und Brennerteil **BT.**
- Figur 2:: Schnittzeichnung eines Ausführungsbeispiels

In den Figuren bedeuten:
   - RT: Reformerteil
   - BT: Brennerteil
   - RR: Reaktionsraum
   - BR: Brennerraum
   - MK1: erste Mischkammer
   - MK2: zweite Mischkammer
   - WT1: erster Wärmetauscher
   - WT2: zweiter Wärmetauscher
   - WT3: dritter Wärmetauscher
   - C/O: Kraftstoff/Oxidationsmittelgemisch
   - H₂O/T: Wasser/Trägergasgemisch
   - D/T: Wasserdampf/Trägergasgemisch
   - RE: Reformat
   - AR: Anodenrestgas
   - BA: Brennerabgas
   - AR/O: Anodenrestgas/Oxidationsmittelgemisch
   - BZ: Brennerzufuhr
   - RA: Reformataustritt
   - WLZ/DA: Wasser- und Luftzufuhr/Dampfaustritt
   - DZ: Dampfzufuhr
   - KLZ: Kraftstoff- und Luftzufuhr

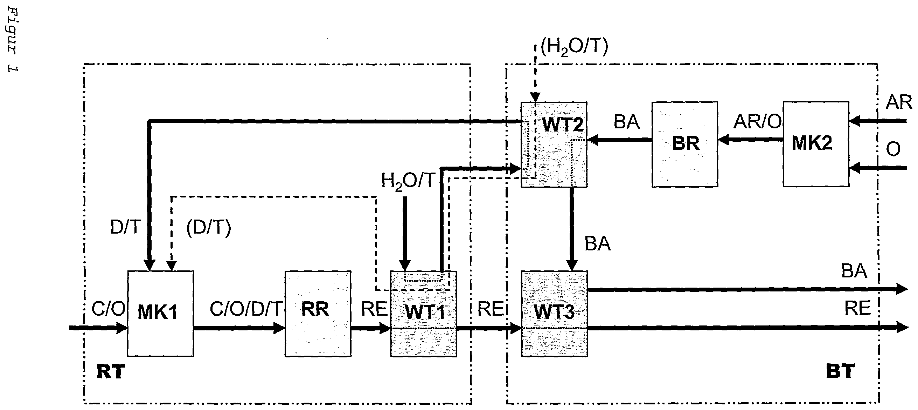

In Figur 1 sind der Reaktionsraum **RR** des autothermen Reformers und der Brennerraum **BR** des Brenners zu erkennen. In beiden Räumen laufen exotherme Prozesse ab. Die hier erzeugte Wärme wird einerseits aus dem Reformat **RE** mittels des ersten Wärmetauschers **WT1** und anderseits aus dem Brennerabgas **BA** mittels des zweiten Wärmetauschers **WT2** zumindest teilweise abgegeben. Beide Wärmetauscher nutzen diese Wärme zur Aufheizung eines Wasser/Oxidationsmittelgemisches **H₂O/T,** welches anschließend als Wasserdampf/Trägergasgemisch **D/T** der ersten Mischkammer zugeführt wird.

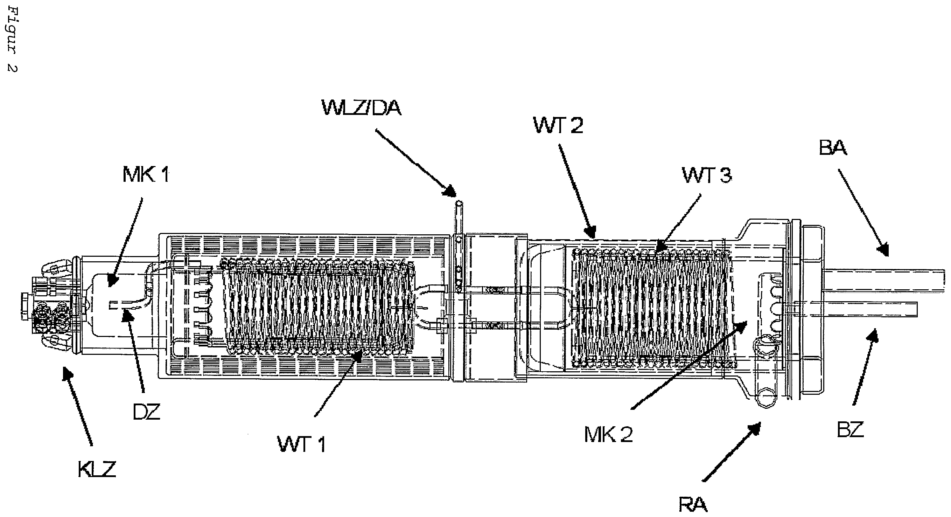

Die Figur 2 zeigt einen Querschnitt durch einen wärmetechnisch gekoppelten Reformer- und Brennerteil eines Reformer/Brenner-Systems. Auf der linken Seite befindet sich die Mischkammer, in die einerseits das Kraftstoff/Oxidationsmittelgemisch und andererseits durch eine weitere Zuführung das Wasserdampf/Trägergasgemisch zugeführt wird. Das Gemisch wird dem Reaktionsraum mit der katalytisch aktiven Oberfläche zugeführt, in dem es zu einem wasserstoffreichen Gemisch umgesetzt wird. Das heiße Reformat strömt nach rechts, wobei die Wärme an den ersten Wärmtauscher abgegeben wird, der spiralförmig im Reformerteil angeordnet ist. Danach wird das Reformat in den Brennerteil geleitet, durchströmt den dritten Wärmetauscher und tritt dann aus dem System aus.

Auf der rechten Seite treten das Anodenrestgas mit der notwendigen Menge an Oxidationsmittel zur Verbrennung des Anodenrestgases in die zweite Mischkammer ein. Das Gasgemisch wird dem Brennerraum zugeleitet. Auch hier führt ein Katalysator zur Umsetzung des Anodenrestgases mittels einer Totaloxidation. Das so gereinigte heiße Gas wird über den zweiten und dritten Wärmetauscher abgekühlt und abgeleitet.

Das zugeführte Wasser/Trägergasgemisch wird zunächst über den ersten und zweiten Wärmetauscher geleitet, wo es die vom Reformat und dem Brennerabgas abgegebene Wärme aufnimmt und als Wasserdampf/Trägergasgemisch in die Mischkammer 1 geleitet werden kann.

## Patentansprüche

1. Vorrichtung zur Erzeugung von wasserstoffreichem Produktgas, mit einem autothermen Reformer
mit einem Reformerteil,
- welches eine Mischkammer mit einem Einlass für eine Kraftstoff/Oxidationsmittelmischung und einen Einlass für eine Wasserdampf/Trägergasmischung aufweist,
- welches einen Reaktionsraum mit einer katalytisch aktiven Oberfläche aufweist,
- welches einen Auslass für ein wasserstoffreiches Produktgas aufweist, und
- welches einen Wärmeaustauscher (WT1) mit einer Durchführung für ein Reformat aufweist,
und mit einem Brennerteil,
- welches einen Einlass für ein Anodenrestgas aus einer Brennstoffzelle und einen Einlass für ein Oxidationsmittel aufweist,
- welches einen Brennerraum mit einer katalytischen Oberfläche aufweist,
- welches einen Auslass für das umgesetzte Restgas aufweist, und
- welches einen Wärmeaustauscher (WT2) mit einer Durchführung für das umgesetzte Abgas sowie einen weiteren Wärmetauscher (WT3) aufweist,
wobei der Reformerteil und der Brennerteil konstruktiv über wenigstens eine Zuführungsleitung für eine Wasserdampf/Trägergasmischung miteinander gekoppelt sind, ***dadurch gekennzeichnet, dass***
- der Wärmetauscher WT1 sowohl den Auslass des der Reformerteils als auch den Reaktionsraum selbst umgibt,
- der Wärmetauscher WT2 sowohl den Auslass des Brennerteils als auch den Brennerraum selbst umgibt,
- sowohl der Wärmetauscher WT1 als auch der Wärmetauscher WT2 eine Durchführung für eine Wasser/Trägergasmischung aufweisen, und
- der Reformerteil und der Brennerteil konstruktiv über eine Durchführungsleitung für das wasserstoffreiche Produktgas miteinander gekoppelt sind.

2. Vorrichtung nach Anspruch 1, bei dem eine Leitung des Wasserdampf/Trägergasgemisches den Wärmetauscher WT1 mit dem Wärmetauscher WT2 verbindet.

3. Vorrichtung nach einem der Ansprüche 1 bis 2, mit Spiralwärmetauschern als Wärmetauscher WT1 und WT2.

4. Verfahren zum Betreiben einer Vorrichtung nach einem der Ansprüche 1 bis 3,
zur Erzeugung eines wasserstoffreichen Produktgases mit den Schritten:
- im Reformerteil wird einer Mischkammer eine Wasserdampf/Trägergasmischung über eine Zuleitung und eine Kraftstoff/Oxidationsmittelmischung über eine Düse zugeführt,
- die Kraftstoff/Wasserdampf/Oxidationsmittel/Trägergasmischung wird in einem Reaktionsraum des Reformerteils katalytisch in exothermen und endothermen Reaktionen in ein wasserstoffreiches Produktgas umgewandelt,
- die dabei frei werdende Wärme wird von einem ersten Wärmetauscher WT1 und von einem weiteren Wärmetauscher WT3 aufgenommen,
- im Brennerteil wird ein Anodenrestgas aus einer Brennstoffzelle in einem Brennerraum katalytisch in einer exothermen Reaktion in schadstoffarmes Abgas umgewandelt,
- die dabei frei werdende Wärme wird von einem weiteren Wärmetauscher WT2 aufgenommen,
- wobei das zugeführte Wasserdampf/Trägergasgemisch über die zwei Wärmetauscher WT1 und WT2 geleitet wird, wo es die vom Reformat und dem Brennerabgas abgegebene Wärme aufnimmt, und als Wasserdampf/Trägergasgemisch in die Mischkammer des Reformerteils geleitet wird.

5. Verfahren nach vorhergehendem Anspruch 4, bei dem die Wasserdampf/Trägergasmischung zunächst über den Wärmetauscher WT1 und anschließend über den Wärmetauscher WT2 geleitet wird.

6. Verfahren nach vorhergehendem Anspruch 4, bei dem die Wasserdampf/Trägergasmischung zunächst über den Wärmetauscher WT2 und anschließend über den Wärmetauscher WT1 geleitet wird.

## Claims

1. Device for producing hydrogen-rich product gas, with an autothermal reformer with a reformer part,
- which has a mixing chamber with an inlet for a fuel/oxidising agent mixture and an inlet for a steam/carrier gas mixture,
- which has a reaction space with a catalytically active surface,
- which has an outlet for a hydrogen-rich product gas and
- which has a heat exchanger (WT1) with a conduit for a reformate,
and with a burner part,
- which has an inlet for an anode residual gas from a fuel cell and an inlet for an oxidising agent,
- which has a combustion space with a catalytic surface,
- which has an outlet for the converted residual gas and
- which has a heat exchanger (WT2) with a conduit for the converted exhaust gas and a further heat exchanger (WT3),
in which the reformer part and the burner part are connected to each other constructively through at least one supply conduit for a steam/carrier gas mixture,
***characterised in that***
- the heat exchanger WT1 surrounds both the outlet of the reformer part and also the reaction space itself,
- the heat exchanger WT2 surrounds both the outlet of the burner part and also the combustion space itself,
- both the heat exchanger WT1 and also the heat exchanger WT2 have a conduit for a steam/carrier gas mixture and :
- the reformer part and the burner part are connected to each other constructively through a conduit for the hydrogen-rich product gas.

2. Device according to claim 1, in which a conduit of the steam/carrier gas mixture connects the heat exchanger WT1 to the heat exchanger WT2.

3. Device according to one of claims 1 to 2 with spiral heat exchangers as heat exchanger WTI and WT2.

4. Method for operating a device according to one of claims 1 to 3 for producing a hydrogen-rich product gas with the steps:
- in the reformer part a steam/carrier gas mixture is supplied through a conduit and a steam/oxidising agent mixture through a nozzle to a mixing chamber,
- the fuel/steam/oxidising agent/carrier gas mixture is converted into a hydrogen-rich product gas catalytically in exothermic und endothermic reactions in a reaction space,
- the heat becoming free in this is absorbed by a first heat exchanger WT1 and by a further heat exchanger WT3,
- in the burner part an anode residual gas from a fuel cell is converted into a low-emission exhaust gas catalytically in an exothermic reaction in a combustion space,
- the heat becoming free in this is absorbed by a further heat exchanger WT2,
- in which the steam/carrier gas mixture is conducted through the two heat exchangers WT1 and WT2, where it absorbs the heat given off by the reformate and the combustion exhaust gas, and is conducted into the mixing chamber of the reformer part as a steam/carrier gas mixture.

5. Method according to the previous claim 4, in which the steam/carrier gas mixture is first conducted through the heat exchanger WT1 and then through the heat exchanger WT2.

6. Method according to the previous claim 4, in which the steam/carrier gas mixture is first conducted through the heat exchanger WT2 and then through the heat exchanger WT1.

## Revendications

1. Dispositif servant à produire un gaz de produit riche en hydrogène, avec un reformeur autothermique,
avec une partie de reformeur,
- qui présente une chambre de mélange avec une entrée pour un mélange de carburant-agent d'oxydation et une entrée pour un mélange de vapeur d'eau/gaz porteur,
- qui présente un espace de réaction avec une surface catalytiquement active,
- qui présente une sortie pour un gaz de produit riche en hydrogène, et
- qui présente un échangeur de chaleur (WT1) avec un passage pour un reformat,
et avec une partie de brûleur,
- qui présente une entrée pour un gaz de restes d'anode issu d'une pile à combustible et une entrée pour un agent d'oxydation,
- qui présente un espace de brûleur avec une surface catalytique,
- qui présente une sortie pour le gaz résiduel transformé, et
- qui présente un échangeur de chaleur (WT2) avec un passage pour les gaz d'échappement transformés ainsi qu'un autre échangeur de chaleur (WT3),
dans lequel la partie de reformeur et la partie de brûleur sont couplées entre elles de manière structurelle par l'intermédiaire d'au moins un conduit d'alimentation pour un mélange de vapeur d'eau-gaz porteur,
**caractérisé en ce que**
- l'échangeur de chaleur WT1 entoure aussi bien la sortie de la partie de reformeur que l'espace de réaction lui-même,
- l'échangeur de chaleur WT2 entoure aussi bien la sortie de la partie de brûleur que l'espace de brûleur lui-même,
- aussi bien l'échangeur de chaleur WT1 que l'échangeur de chaleur WT2 présentent un passage pour un mélange d'eau-gaz porteur, et
- la partie de reformeur et la partie de brûleur sont couplées entre elles de manière structurelle par l'intermédiaire d'un conduit de passage pour le gaz de produit riche en hydrogène.

2. Dispositif selon la revendication 1, dans lequel un conduit du mélange de vapeur d'eau-gaz porteur relie l'échangeur de chaleur WT1 à l'échangeur de chaleur WT2.

3. Dispositif selon l'une quelconque des revendications 1 à 2, avec des échangeurs de chaleur à spirales en tant qu'échangeurs de chaleur WT1 et WT2.

4. Procédé servant à faire fonctionner un dispositif selon l'une quelconque des revendications 1 à 3, servant à produire un gaz de produit riche en hydrogène, avec les étapes qui suivent :
- dans la partie de reformeur, sont amenés à une chambre de mélange un mélange de vapeur d'eau-gaz porteur par l'intermédiaire d'un conduit d'arrivée et un mélange de carburant-agent d'oxydation par l'intermédiaire d'une buse,
- le mélange de carburant-vapeur d'eau-agent d'oxydation-gaz porteur est transformé, dans un espace de réaction de la partie de reformeur, de manière catalytique en un gaz de produit riche en hydrogène lors de réactions exothermiques et endothermiques,
- la libération de chaleur est absorbée par un premier échangeur de chaleur WT1 et par un autre échangeur de chaleur WT3,
- dans la partie de brûleur, un gaz résiduel anodique issu d'une pile à combustible est transformé en un gaz d'échappement pauvre en polluant dans un espace de brûleur de manière catalytique lors d'une réaction exothermique,
- la libération de chaleur est absorbée par un autre échangeur de chaleur WT2,
- dans lequel le mélange de vapeur d'eau-gaz porteur amené est acheminé par l'intermédiaire des deux échangeurs de chaleur WT1 et WT2, où il absorbe la chaleur dégagée par le reformat et le gaz d'échappement de brûleur, et est acheminé en tant que mélange de vapeur d'eau-gaz porteur dans la chambre de mélange de la partie de reformeur.

5. Procédé selon la revendication 4 précédente, dans lequel le mélange vapeur d'eau-gaz porteur est acheminé dans un premier temps par l'intermédiaire de l'échangeur de chaleur WT1 puis immédiatement après par l'intermédiaire de l'échangeur de chaleur WT2.

6. Procédé selon la revendication 4 précédente, dans lequel le mélange vapeur d'eau-gaz porteur est acheminé dans un premier temps par l'intermédiaire de l'échangeur de chaleur WT2 puis immédiatement après par l'intermédiaire de l'échangeur de chaleur WT1.
